# FASCICULE DE BREVET EUROPEEN

(11) **EP 1 045 130 B1**
(45) Date de publication et mention de la délivrance du brevet: **19.01.2005**
(21) Numéro de dépôt: 00401026.0
(22) Date de dépôt: 13.04.2000
(51) Int. Cl.: F02K 1/00, F02K 1/12

(54) **Tuyère d'éjection axisymétrique, convergente divergente, à orientation par un anneau guide**
Allseitig schwenkbare konvergente - divergente Schubdüse mit einem kardanischen Bedienungsring
Axisymmetric vectoriable convergent - divergent nozzle actuated by a unison ring

(30) Priorité: 15.04.1999 FR 9904710
(43) Date de publication de la demande: 18.10.2000
(73) Titulaire: SNECMA MOTEURS, 75015 Paris (FR)
(72) Inventeur: Feder, Didier Georges, 77176 Savigny le Temple (FR); Lapergue, Guy Jean-Louis, 77950 Rubelles (FR); Monville, Bertand Pierre Renaud, 77550 Moissy Cramayel (FR); Salperwyck, Laurent Claude Patrick, 77650 Lizines (FR)

(56) Documents cités:
- EP-A- 0 557 229
- WO-A-92/03649
- FR-A- 1 025 827
- US-A- 3 004 385
- US-A- 4 508 270
- US-A- 5 351 888

## Description

L'invention concerne une tuyère d'éjection de turboréacteur.

Elle concerne plus précisément une tuyère d'éjection de type axisymétrique, convergente divergente, et dont la partie divergente située en aval de la partie convergente est orientable par rapport à l'axe du turboréacteur, ladite partie divergente comportant une pluralité de volets divergents articulés en amont sur les extrémités aval des volets convergents et articulés en aval sur des bielles reliées à un anneau de vectorisation dont le déplacement axial et le basculement sont commandés par une pluralité de vérins ancrés sur une structure fixe, et des moyens de guidage étant prévus pour guider l'anneau de vectorisation par rapport à la structure fixe au cours de son mouvement.

Les tuyères orientables offrent aux avions de combat une agilité supplémentaire et une meilleure manoeuvrabilité en tangage et lacet. Dans certaines dispositions, l'ensemble et la tuyère convergente divergente est monté rotulant sur un élément sphérique. Dans d'autres dispositions, plus légères, seule la partie divergente de la tuyère est montée pivotante au moyen d'un anneau de vectorisation.

FR-A-2 645 593 montre une tuyère dans laquelle l'anneau de vectorisation actionné par trois vérins de commandes décalés de 120° l'un par rapport à l'autre, est monté sur la structure au moyen de trois tiges axiales espacées de 120° l'une de l'autre et pouvant coulisser dans des supports solidaires de la structure fixe. Les tiges sont liées à l'anneau par des liaisons rotulantes. Si la longueur de guidage des paliers de coulissement est insuffisante, les forces radiales appliquées à l'extrémité de la tige produisent un couple de basculement pouvant entraîner le coincement de la tige lors de sa translation.

WO 92/03649 prévoit sur l'anneau de vectorisation trois broches radiales qui sont espacées angulairement l'une de l'autre de 120° autour de l'axe et l'anneau et qui coulissent dans des lumières axiales qui sont prévues entre des paires de rails parallèles solidaires de la structure fixe et dont les plans médians se coupent le long de l'axe du turboréacteur. Avec cette disposition, le centre de l'anneau de vectorisation défini par le point d'intersection des axes des broches est positionné idéalement sur l'axe du turboréacteur. Toutefois, l'apparition de couples radiaux dans la liaison entre les broches sous l'action des forces de pression peut créer des forces de frottement néfastes dans la position de déviation de jet. Ce document représente l'état de la technique le plus proche de la présente invention.

EP-A-0 557 229 décrit une tuyère d'éjection du type ci-dessus dans laquelle les moyens de guidage de l'anneau de vectorisation comportent trois lumières axiales qui sont ménagées respectivement dans des pattes solidaires de la structure fixe et dont les plans médians se coupent le long de l'axe du turboréacteur, les parois latérales délimitant lesdites lumières servant au guidage de trois galets sphériques sertis sur des broches radiales solidaires de l'anneau de vectorisation et régulièrement espacées l'une de l'autre.

Ainsi, les centres des galets sont positionnés dans les plans médians des lumières, et la reprise de la résultante axiale des forces de pressions différentielles dues à la déviation du jet se fait tangentiellement aux joints de contact des galets sphériques et des parois latérales des lumières, supprimant ainsi les couples radiaux néfastes.

En outre, les vérins de commande sont reliés à l'anneau de vectorisation et à la structure fixe par des liaisons rotulantes. Ainsi, la reprise de la composante tangentielle des forces de pressions différentielles n'a aucune influence sur les vérins de commande.

Un des buts de l'invention est d'assurer un moyen de guidage d'un anneau de vectorisationpar trois rails sans risque de coincement, tout en assurant également la translation axiale de l'anneau.

L'invention atteint son but par le fait que pour répartir les forces tangentielles sur une plus grande surface d'appui, chaque galet sphérique est de préférence monté dans la lumière correspondante avec interposition d'un premier coulisseau susceptible de coulisser axialement le long des parois latérales de ladite lumière, et d'un deuxième coulisseau susceptible de coulisser radialement sur le premier coulisseau, ledit galet étant en liaison sphérique avec ledit deuxième coulisseau.

Les broches radiales s'étendent de préférence à l'intérieur de l'anneau de vectorisation.

Avantageusement, le premier coulisseau comporte un orifice radial dans lequel coulisse le deuxième coulisseau.

D'autres avantages et caractéristiques de l'invention ressortiront à la lecture de la description suivante faite à titre d'exemple et en référence aux dessins annexés dans lesquels :
- la figure 1 est une coupe selon un plan axial d'une tuyère axisymétrique convergente divergente et orientable, conforme à l'invention, cette tuyère étant montrée dans la configuration ouverte et sans déviation du jet ;
- la figure 2 est semblable à la figure 1 et montre la tuyère dans une position fermée et déviation du jet vers le bas ;
- la figure 3 montre en coupe et à grande échelle les moyens de guidage de l'anneau de vectorisation selon un premier mode de réalisation de l'invention ;
- la figure 4 montre en coupe et à grande échelle les moyens de guidage de l'anneau de vectorisation selon un deuxième mode de réalisation de l'invention ; et

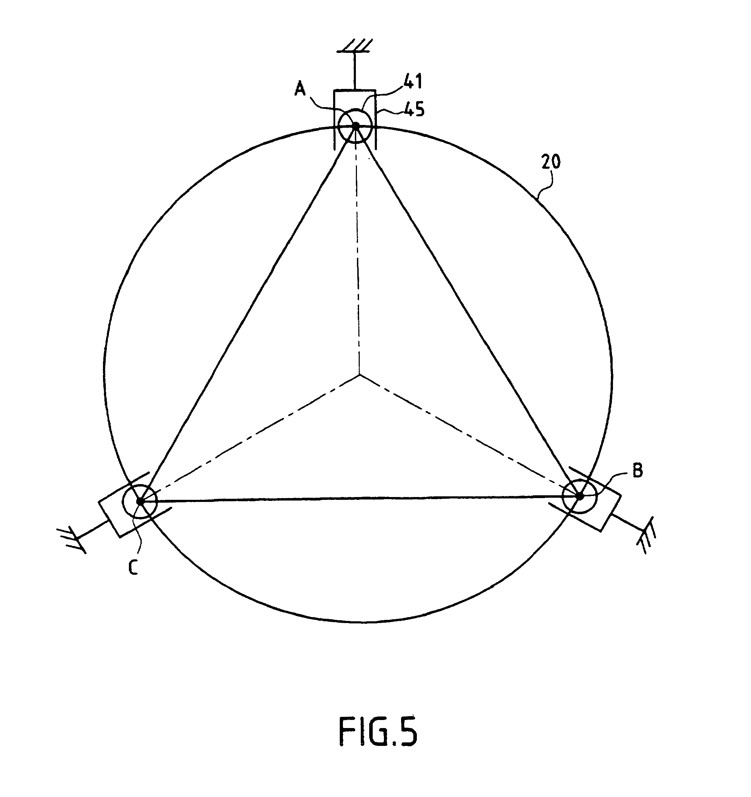

- la figure 5 est une vue en coupe de l'anneau de vectorisation et des moyens de guidage selon un plan perpendiculaire à l'axe de l'anneau de vectorisation.

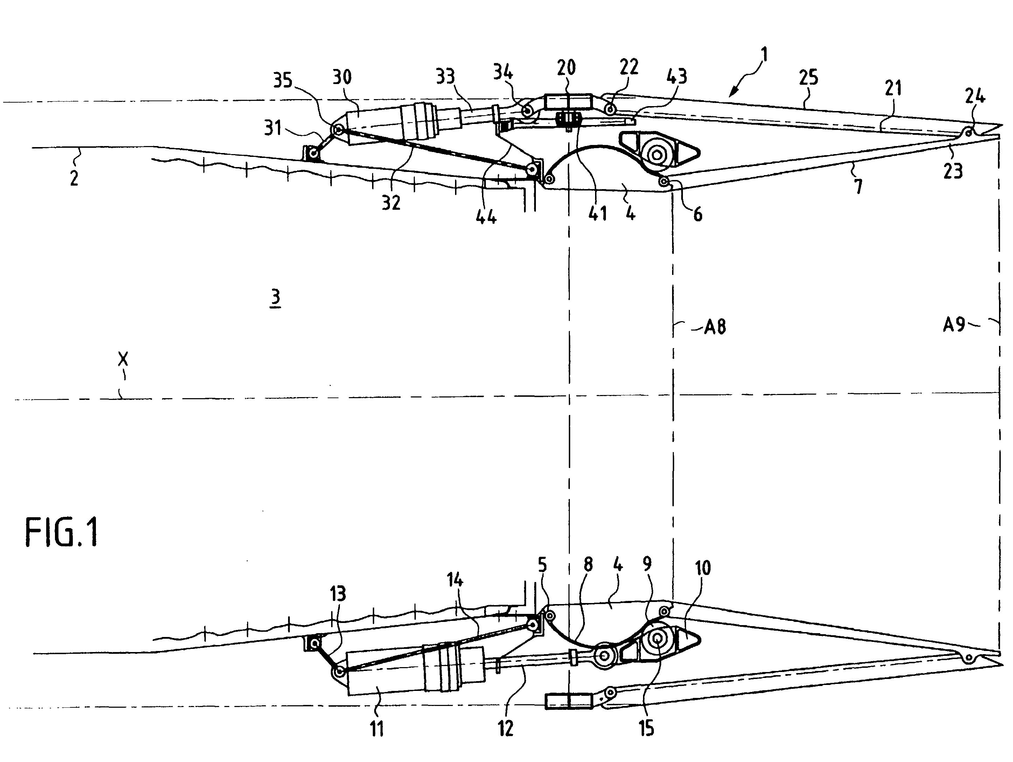

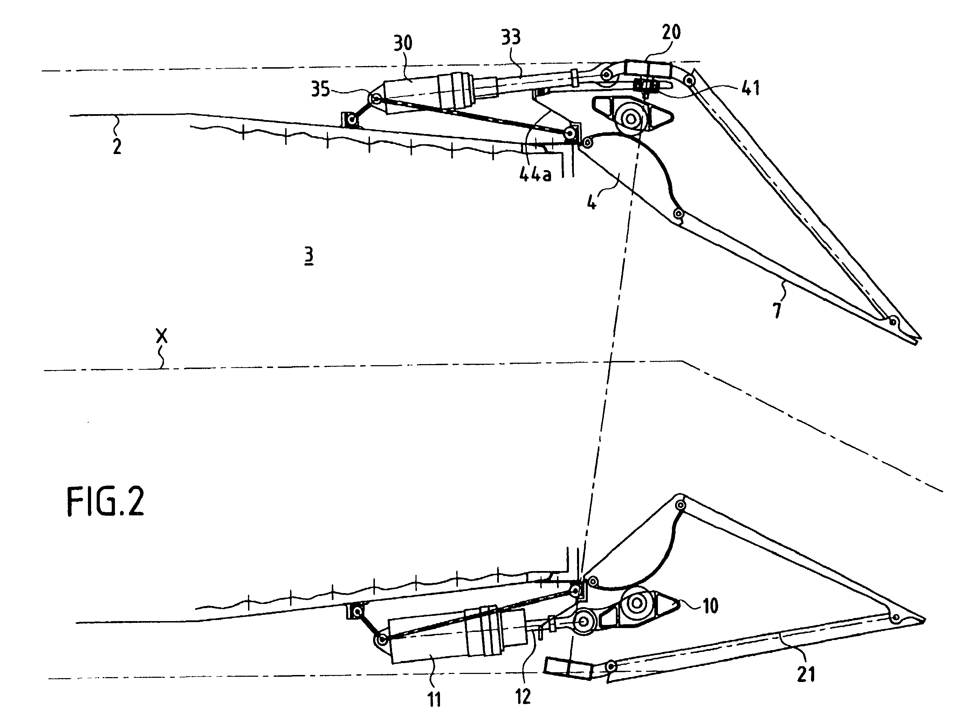

Les figures 1 et 2 montrent une tuyère axisymétrique convergente divergente et orientable disposée en aval d'un carter annulaire 2, d'axe X, délimitant une chambre 3 de postcombustion située en aval de la turbine d'un turboréacteur d'axe X.

La tuyère 1 comporte une première série de volets convergents 4 articulés sur l'extrémité aval du carter 2 par des charnières 5 et dont la sortie délimite la section A8 du col de la tuyère 1.

En aval des volets convergents 4, sont articulées au moyen de joints universels 6, les extrémités amont de volets divergents 7.

Les volets convergents 4 comportent en alternance des volets convergents commandés et des volets convergents suiveurs. Les volets convergents commandés 4 comportent sur leur face externe des chemins de came 8 sur lesquels peuvent rouler des galets 9 portés par un anneau de commande 10 d'axe X susceptible d'être déplacé parallèlement à l'axe X par une pluralité de vérins de commande 11 ancrés en amont sur le carter 2, et dont les tiges 12 se déplacent à l'unisson afin de régler la section A8 en fonction des phases de vol de l'avion équipé de la tuyère 1. Le vérin 11 est relié au carter 2 par des bielles 13 et 14 qui permettent la reprise des efforts de poussée. Les tiges 12 des vérins 11 sont liées à l'anneau de commande 10 par des liaisons rotulantes 15.

Les volets divergents 7 comportent également une pluralité de volets divergents commandés et une pluralité de volets divergents suiveurs intercalés entre les volets divergents commandés. Les volets divergents commandés sont articulés respectivement sur les volets convergents commandés au moyen des joints universels 6 qui permettent une articulation radiale et tangentielle.

Les volets divergents 7 sont reliés à un anneau de vectorisation 20 par des bielles 21 articulées à leur extrémité amont sur l'anneau de vectorisation 20 au point 22 et articulés à leur extrémité aval sur l'extrémité aval 23 des volets divergents 20 par une liaison 24. Les bielles 21 peuvent être intégrées à des volets extérieurs froids 25 situés dans le prolongement du carénage du turboréacteur.

L'anneau de vectorisation 20 est commandé par au moins trois vérins de commande 30 régulièrement répartis autour de l'axe X et reliés à leur extrémité amont au carter 2 par des bielles 31 et 32 qui reprennent les efforts de poussée des vérins 30. Les tiges 33 des vérins 30 sont reliées à l'anneau de vectorisation 20 par une liaison rotulante 34. De préférence, la liaison 35 entre les vérins 30 et les bielles 31 et 32 est également rotulante.

L'anneau de vectorisation 20 présente sur sa face interne trois broches radiales 40 espacées entre elles d'un angle de 120°. Chaque broche 40 est équipée d'un galet 41 à paroi externe sphérique.

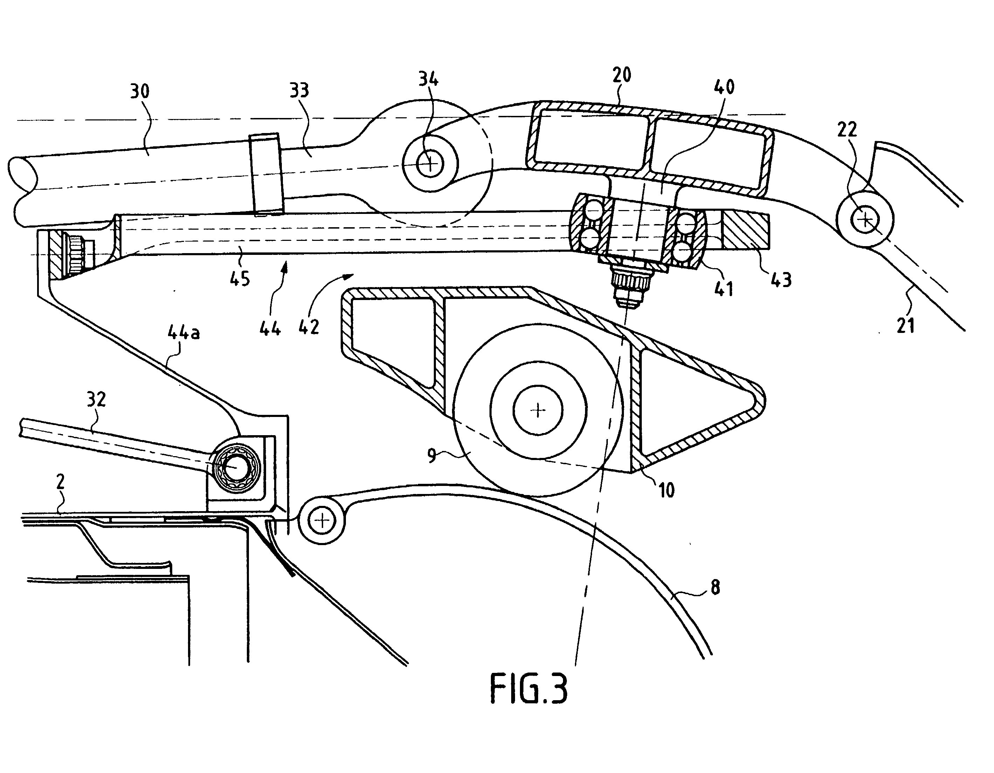

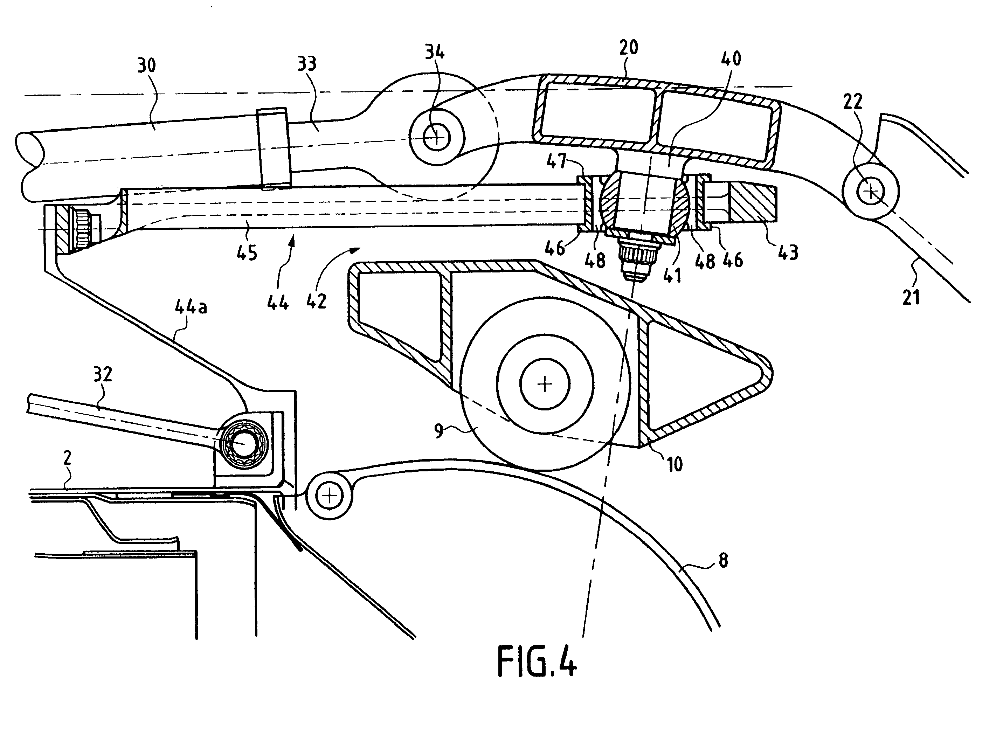

Chaque galet 41 est destiné à coopérer avec des moyens de guidage 42 solidaires du carter 2, ainsi que cela est montré sur les figures 3 et 4.

Les moyens de guidage 42 comportent, pour chaque galet 41, une patte 43 solidaire d'une bride annulaire 44a disposée à l'extrémité aval du carter 2. La patte 43 s'étend vers l'aval, parallèlement à l'axe X dans l'espace disposé entre l'anneau de commande 10 et l'anneau de vectorisation 20. La patte 43 présente une lumière axiale 44 délimitée par deux parois parallèles 45 disposées de part et d'autre d'un plan médian contenant l'axe X du turboréacteur.

Selon un premier mode de réalisation de l'invention, montré sur la figure 3, la distance séparant les deux parois parallèles 45 est sensiblement égale au diamètre du galet 41, et le galet 41 est disposé dans la lumière 44. La partie sphérique du galet 41 permet tout mouvement de translation du centre du galet 41 dans le plan médian de la lumière 44 et garantit également les rotations de l'anneau de vectorisation 20 nécessaires à sa cinématique autour du centre du galet 41.

Selon un deuxième mode de réalisation de l'invention, montré sur la figure 4, la distance séparant les deux parois parallèles 45 qui délimitent la lumière 43 est supérieure au diamètre du galet sphérique 41. Un premier coulisseau 46 est monté sur la patte de manière à glisser librement le long des parois 45 dans la lumière 43.

Ce premier coulisseau 46 comporte un orifice 47 de section non circulaire et d'axe géométrique perpendiculaire à l'axe X dans lequel est monté coulissant radialement un deuxième coulisseau 48. Le galet sphérique 41 est en liaison sphérique avec le deuxième coulisseau 48. Le déplacement radial du galet sphérique 41 entraîne le déplacement radial du deuxième coulisseau 48 par rapport au premier coulisseau 46. Un déplacement axial du galet sphérique 41 entraîne un déplacement axial du premier coulisseau 46 dans la lumière 44.

Un déplacement identique des tiges 33 de trois vérins de commande 30 entraîne une translation de l'anneau de vectorisation 20 parallèlement à l'axe X, les trois galets 41 étant maintenus dans les lumières 44 des pattes 43, leurs centres A, B et C étant dans des plans sécants le long de l'axe X et faisant des angles de 120° entre eux. Les distances entre les centres A, B et C des galets 41 restent toujours constantes.

Un déplacement différentiel des tiges 33 des trois vérins de commande 30 entraîne un basculement de l'anneau de vectorisation 20 par rapport à l'axe X. Mais les galets 41 étant maintenus dans les lumières 44, il existe une position unique pour l'anneau de vectorisation 20 par rapport au carter 2. Le basculement de l'anneau de vectorisation 20 entraîne un déplacement des volets divergents 7 et une modification de la section A9 de sortie de la partie divergente de la tuyère 1, ce qui entraîne une déviation du jet des gaz d'éjection, et des pressions différentielles sur les faces internes des volets divergents 7. La composante de ces forces de pression est reprise tangentiellement par les parois 45 qui délimitent les lumières 44.

## Revendications

1. Tuyère d'éjection pour turboréacteur, de type axisymétrique, convergente divergente, et dont la partie divergente située en aval de la partie convergente est orientable par rapport à l'axe X du turboréacteur, ladite partie divergente comportant une pluralité de volets divergents (7) articulés en amont sur les extrémités aval des volets convergents (3) et articulés en aval sur des bielles (21) reliées à un anneau de vectorisation (20) dont le déplacement axial et le basculement sont commandés par une pluralité de vérins (30) ancrés sur une structure fixe (2), et des moyens de guidage (42) étant prévus pour guider l'anneau de vectorisation (20) par rapport à la structure fixe (2) au cours de son mouvement,
les moyens de guidage (42) de l'anneau de vectorisation (20) comportent trois lumières (44) axiales qui sont ménagées respectivement dans des pattes (43) solidaires de la structure fixe (2) et dont les plans médians se coupent le long de l'axe X du turboréacteur, les parois latérales (45) desdites lumières servant au guidage de trois galets sphériques (41) sertis sur des broches (40) radiales solidaires de l'anneau de vectorisation (30) et régulièrement espacées l'une de l'autre, **caractérisée par le fait que** chaque galet sphérique (41) est monté dans la lumière (44) correspondante avec interposition d'un premier coulisseau (46) susceptible de coulisser axialement le long des parois latérales (45) de ladite lumière (44), et d'un deuxième coulisseau (48) susceptible de coulisser radialement sur le premier coulisseau (46), ledit galet (41) étant en liaison sphérique avec ledit deuxième coulisseau (48).

2. Tuyère selon la revendication 1, **caractérisée par le fait que** les broches (40) radiales s'étendent à l'intérieur de l'anneau de vectorisation (20).

3. Tuyère selon la revendication 1, **caractérisée par le fait que** le premier coulisseau (46) comporte un orifice (47) radial dans lequel coulisse le deuxième coulisseau (48).

## Patentansprüche

1. Achsensymmetrische, konvergente-divergente Schubdüse für Turbotriebwerke, deren hinter dem konvergenten Teil befindlicher divergenter Teil schwenkbar gegenüber der Achse X des Turbotriebwerks ist, wobei dieser divergente Teil eine Vielzahl von divergenten Klappen (7) aufweist, die vom an den hinteren Enden der konvergenten Klappen (3) angelenkt sind und hinten an Stangen (2 1 ) angelenkt sind, die mit einem Vektorisationsring (20) verbunden sind, dessen axiale Verschiebung und Schwenken durch eine Vielzahl von Zylindern (30) gesteuert wird, die an einem festen Aufbau (2) verankert sind, und wobei Führungsmittel (42) vorgesehen sind, um den Vektorisationsring (20) gegenüber dem festen Aufbau (2) bei seiner Bewegung zu führen, wobei die Führungsmittel (42) für den Vektorisationsring (20) drei axiale Fenster (44) umfassen, die jeweils in fest mit dem festen Aufbau (2) verbundenen Armen (43) ausgeführt sind, deren Mittelebenen sich längs der Achse X des Turbotriebwerks schneiden, wobei die Seitenwände (45) dieser Fenster zur Führung von drei kugelförmigen Rollen (41) dienen, die an Bolzen (40) angebördelt sind, die sich radial erstrecken, fest mit dem Vektorisationsring (20) verbunden sind und in regelmäßigen Abständen zueinander angeordnet sind
**dadurch gekennzeichnet,**
**dass** jede kugelförmige Rolle (41) in dem entsprechenden Fenster (44) angebracht wird, indem dazwischen ein erstes Gleitstück (46) angeordnet wird, das geeignet ist, axial entlang der Seitenwände (45) dieses Fensters (44) zu gleiten, sowie ein zweites Gleitstück (48), das geeignet ist, radial auf dem ersten Gleitstück (46) zu gleiten, wobei sich die Rolle (41) mit diesem zweiten Gleitstück (48) in einer Kugelverbindung befindet.

2. Düse nach Anspruch 1,
**dadurch gekennzeichnet,**
**dass** sich die radialen Bolzen (40) im Inneren des Vektorisationsrings (20) erstrecken.

3. Düse nach Anspruch 1,
**dadurch gekennzeichnet,**
**dass** das erste Gleitstück (46) eine radiale Öffnung (47) aufweist, in der das zweite Gleitstück (48) gleitet.

## Claims

1. Exhaust nozzle for a gas turbine, of the axisymmetric convergent-divergent type, whose divergent part located downstream of the convergent part can be orientated with respect to the gas turbine axis X, the said divergent part comprising a plurality of divergent flaps (7) pivoted upstream on the downstream ends of the convergent flaps (3) and pivoted downstream on link rods (21) connected to a vectoring ring (20) whose axial movement and oscillation are controlled by a plurality of jacks (30) secured to a fixed structure (2), guide means (42) being provided to guide the vectoring ring (20) with respect to the fixed structure (2) in the course of its movement,
the guide means (42) of the vectoring ring (20) comprising three axial apertures (44) which are provided in corresponding lugs (43) which are fixed to the fixed structure (2) and whose median planes intersect along the gas turbine axis X, the lateral walls (45) of the said apertures serving to guide three spherical roller bearings (41) crimped on to radial spindles (40) fixed to the vectoring ring (30) and spaced at regular intervals from each other, **characterized in that** each spherical roller bearing (41) is mounted in the corresponding aperture (44) with the interposition of a first slide block (46) which can slide axially along the lateral walls (45) of the said aperture (44), and a second slide block (48) which can slide radially on the first slide block (46), the said roller bearing (41) being in spherical contact with the said second slide block (48).

2. Nozzle according to Claim 1, **characterized in that** the radial spindles (40) extend into the vectoring ring (20).

3. Nozzle according to Claim 1, **characterized in that** the first slide block (46) comprises a radial orifice (47) in which the second slide block (48) slides.
